# EUROPEAN PATENT APPLICATION

(11) **EP 1 626 363 A1**
(43) Date of publication of application: **15.02.2006**
(21) Application number: 05017671.8
(22) Date of filing: 12.08.2005
(51) Int. Cl.: G06K 19/073

(54) **Information providing method, information providing system and relay equipment**

(30) Priority: 12.08.2004 JP 2004235596
(71) Applicant: NTT DoCoMo, Inc., Tokyo (JP)
(72) Inventor: Sugiyama, Toshiharu Intellectual Property Dep., 11-2,Nagatacho 2-chome Chiyoda-ku Tokyo (JP); Hagino, Hiroaki Intellectual Property Dep., 11-2,Nagatacho 2-chome Chiyoda-ku Tokyo (JP); Yamazaki, Kenichi Intellectual Property Dep., 11-2,Nagatacho 2-chome Chiyoda-ku Tokyo (JP)
(74) Representative: HOFFMANN EITLE

(57) **Abstract**

An information providing method, comprises receiving a receiver identifier and an encrypted transmitter identifier from a receiver receiving the encrypted transmitter identifier from a transmitter by a relay equipment, decrypting the encrypted transmitter identifier by the relay equipment, determining an information providing equipment providing transmitter information with respect to the transmitter based on a decryption result of the encrypted transmitter identifier by the relay equipment, requesting the transmitter information from the information providing equipment by the relay equipment, receiving the transmitter information from the information providing equipment by the relay equipment, and transmitting the transmitter information to the receiver by the relay equipment.

## Description

### CROSS REFERENCE TO RELATED APPLICATIONS

This application is based upon and claims the benefit of priority from prior Japanese Patent Application No.2004-235596, filed on August 12, 2004; the entire contents of which are incorporated herein by reference.

### BACKGROUND OF THE INVENTION

### 1. Field of the Invention

The present invention relates to an information providing method, an information providing system, and a relay equipment.

### 2. Description of the Related Art

Conventionally, in a system using a Radio Frequency Identification (RFID) tag, which transmits an RFID and an RFID reader, which receives the RFID, when the RFID reader inquires of a data base server about the RFID, an object, which is attached with the RFID tag, can be identified. Therefore, by tracing the RFID tag, the object attached with the RFID tag can be traced. Accordingly, there arises a problem such that, by associating an RFID to a human in the same manner as the case of the object, the human can be traced.

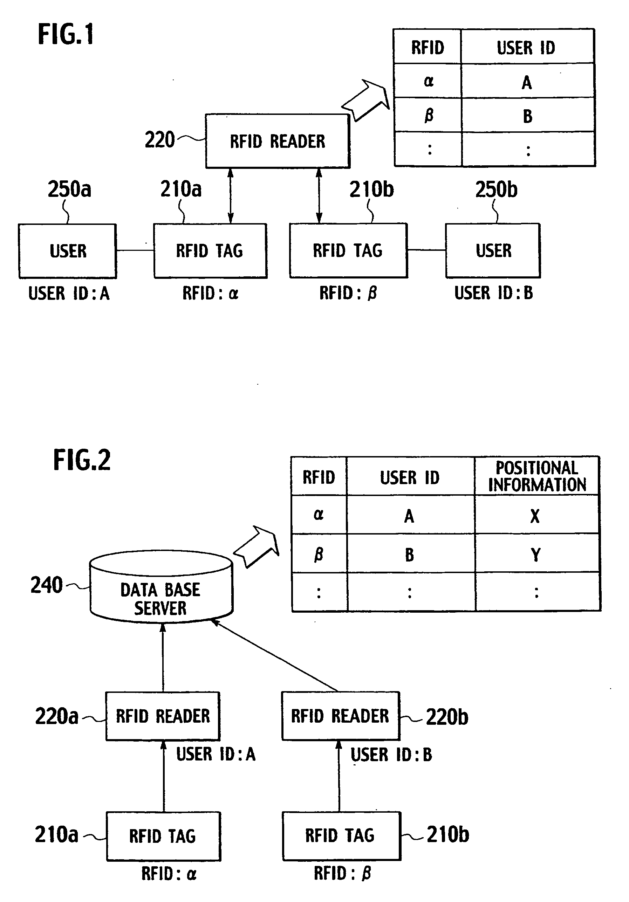

In particular, when a user ID and a RFID tag can be associated with each other visually or by other means, by tracing the RFID, the user can be easily traced. For example, as shown in Fig. 1, by associating a user ID [A] of a user 250a with an RFID [α] of an RFID tag 210a, and by associating a user ID [B] of a user 250b with an RFID [β] of an RFID tag 210b, the RFID reader 220 can trace the users 250a and 250b easily.

To prevent invasion of privacy using RFID tag as described above, a method to change the RFID has been proposed (for example, Kinosita Shingo, Hosino Bungaku, Komuro Tomoyuki, Fujimura Akiko, Okubo Miyako, "variable privacy ID system for achieving RFID privacy protection", NTT Information Distribution Platform Laboratory, Computer Security Symposium 2003(referred to as "Document 1"); Okubo Miyako, Suzuki Koutaro, Kinosita Shingo, "Forward-secure RFID Privacy Protection for Low-cost RFID", NTT Information Distribution Platform Laboratory, Computer Security Symposium 2003 (referred to as "Document 2"), Japanese Patent Application Laid-Open No. 2004-192645 (referred to as "Document 3").

Document 1 proposes a method to prevent continuous tracing of RFID tag by enabling the RFID stored in the RFID tag to be rewritten. In this method, the association between the original RFID and the rewritten RFID is stored in a data base server, and the association therebetween is maintained. Document 2 proposes a method in which the RFID tag calculates a hash value using the RFID, and changes the information to be transmitted every time, to prevent the tracing. In this method, a data base server performs the same calculating as the RFID tag, and the RFID tag and the data base server are synchronized with each other, in order to maintain its identity.

However, in the conventional method, in order to inquiry of the data base server about the RFID. the RFID reader has to know the server information with respect to data base server. However, for example, when an individual owns the data base server, in some cases, the server information itself is the information, which should not be disclosed to the third party like personal information. As described above, in the conventional method, there resides such problem that server information such as personal information is disclosed to an RFID reader.

Also, in the method of Document 1, unless the RFID tag is provided with authentication function or the like, any one can rewrite the RFID; thus, there is a possibility that the data base server might loss the association. Further, unless rewritten, the information is traceable. In the method of Document 2, if synchronism between the RFID tag and the data base server, they cannot function. However, under the conditions of application of the RFID tag, perfect synchronism is hardly achieved. Furthermore, to maintain the synchronism, enormous calculating is required. As described above, in the conventional method, to prevent the tracing, complicated management is required for changing the RFID; thus, it is difficult to prevent the tracing.

Also, as shown in Fig. 2, there is a case, when an RFID reader 220a receives an RFID [α] from the RFID tag 210a and produces the RFID [α] to a data base server 240 to inquire about information with respect to the RFID tag 210a, the user ID [A] of a user owning the RFID reader 220a is transmitted. In this case, the data base server 240 can associate the user ID [A] of the RFID reader 220a, the RFID [α] of the RFID tag 210a and the positional information [X] of the RFID tag 210a etc with each other. Likewise, the data base server 240 can associate a user ID [B] of an RFID reader 220b, a RFID [β] of a RFID tag 210b and positional information [Y] of the RFID tag 210b with each other. Therefore, the data base server 240 can trace the RFID reader 220a, 220b, and trace the users of the RFID reader 220a, 220b. There arises a problem when the data base server 240 is a party to which the users of the RFID reader 220a, 220b does not want to disclose the information like user ID.

As described above, in the conventional method, in the information providing process using a transmitter such as RFID tag, a receiver such as RFID reader, and an information providing equipment such as data base server, which provides transmitter information with respect to a transmitter, it is difficult to keep the confidential of the information from a party to which the confidential of the information should be kept and to provide the information safely.

### SUMMARY OF THE INVENTION

An object of the present invention is to easily achieve safety providing of information in an information providing process in which a transmitter, a receiver and an information providing equipment are involved in each other.

An information providing method according to an embodiment of the present invention includes receiving a receiver identifier and an encrypted transmitter identifier from a receiver receiving the encrypted transmitter identifier from a transmitter by a relay equipment, decrypting the encrypted transmitter identifier by the relay equipment, determining an information providing equipment providing transmitter information with respect to the transmitter based on a decryption result of the encrypted transmitter identifier by the relay equipment, requesting the transmitter information from the information providing equipment by the relay equipment, receiving the transmitter information from the information providing equipment by the relay equipment, and transmitting the transmitter information to the receiver by the relay equipment. The transmitter identifier is information capable of uniquely identifying the transmitter. The receiver identifier is information capable of uniquely identifying the receiver.

According to the information providing method as described above, even when the transmitter identifier is encrypted, the relay equipment can decrypt the encrypted transmitter identifier and determine the information providing equipment, which provides the transmitter information desired by the receiver. And the relay equipment can relay the transmitter information between the information providing equipment and the receiver. Accordingly, the confidential of the transmitter identifier and providing equipment information with respect to the information providing equipment can be kept from the receiver. Thus, in the information providing process involving a transmitter, a receiver and an information providing equipment, safety providing of information can be easily achieved.

An information providing system according to an embodiment of the present invention includes a relay equipment configured to receive a receiver identifier and an encrypted transmitter identifier from a receiver receiving the encrypted transmitter identifier from a transmitter, decrypt the encrypted transmitter identifier, determine an information providing equipment providing transmitter information with respect to the transmitter based on a decryption result of the encrypted transmitter identifier, request the transmitter information from the information providing equipment, receive the transmitter information from the information providing equipment, and transmit the transmitter information to the receiver, and the information providing equipment configured to transmit the transmitter information to the relay equipment in response to a request of the relay equipment.

A relay equipment according to an embodiment of the present invention includes a reception unit configured to receive a receiver identifier and an encrypted transmitter identifier from a receiver receiving the encrypted transmitter identifier from a transmitter, a decryption unit configured to decrypt the encrypted transmitter identifier, a request unit configured to determine an information providing equipment providing transmitter information with respect to the transmitter based on a decryption result of the encrypted transmitter identifier and request the transmitter information from the information providing equipment, and a transfer unit configured to receive the transmitter information from the information providing equipment and transmit the transmitter information to the receiver.

According to the relay equipment as described above, even when the transmitter identifier is encrypted, the encrypted transmitter identifier can be decrypted and the information providing equipment, which provides the transmitter information desired by the receiver, can be determined. And the relay equipment can relay the transmitter information between the information providing equipment and the receiver. Accordingly, the confidential of the transmitter identifier and providing equipment information can be kept from the receiver. Thus, in the information providing process involving a transmitter, a receiver and an information providing equipment, safety providing of information can be easily achieved.

### BRIEF DESCRIPTION OF THE DRAWINGS

Fig. 1 is a diagram for explaining problems in a conventional method;
Fig. 2 is a diagram for explaining problems in a conventional method;
Fig. 3 is a block diagram showing a information providing system according to an embodiment of a present invention;
Figs. 4A and 4B are diagram showing an encrypted RFID and a determination information according to the embodiment of the present invention; and
Fig. 5 is a flowchart showing a procedure of information providing method according to the embodiment of the present invention.

### DETAILED DESCRIPTION OF THE EMBODIMENTS

(Information providing system)

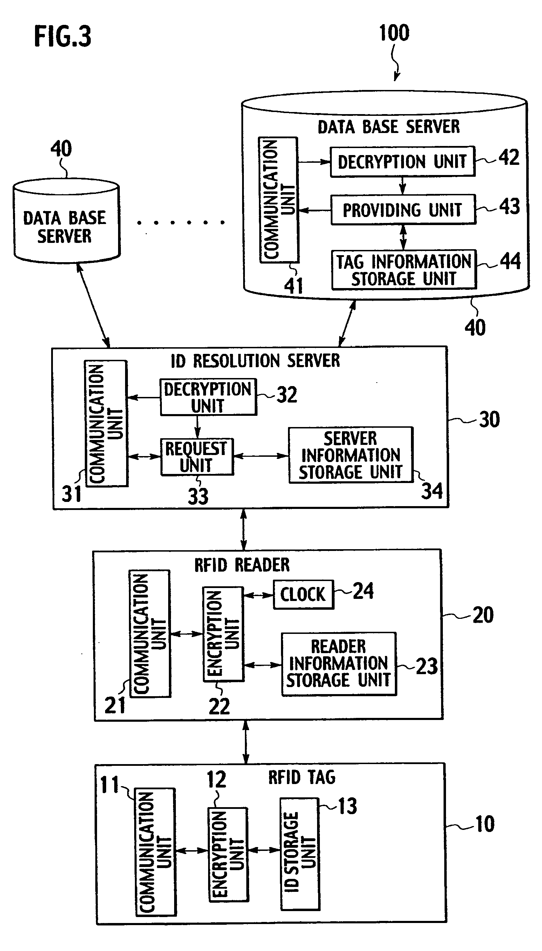

As shown in Fig. 3, an information providing system 100 includes a RFID tag 10, an RFID reader 20, an ID resolution server 30, and a plurality of data base servers 40. The RFID tag 10 is a transmitter transmitting transmitter identifier to a receiver. The RFID reader 20 is the receiver receiving the transmitter identifier. The data base server 40 is an information providing equipment providing the transmitter information with respect to the transmitter. The ID resolution server 30 is a relay equipment relaying the communication between the receiver and the information providing equipment.

The RFID tag 10 includes a communication unit 11, an encryption unit 12, and an ID storage unit 13. The ID storage unit 13 stores RFID. The RFID is a transmitter identifier, which is information capable of uniquely identifying the RFID tag 10.

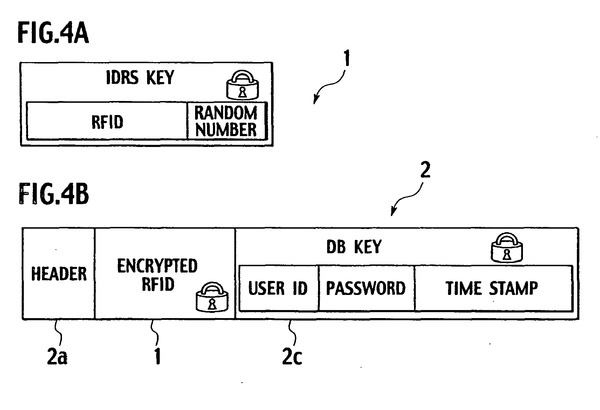

The encryption unit 12 encrypts the RFID as the transmitter identifier. The encryption unit 12 obtains the RFID from the ID storage unit 13. The encryption unit 12 encrypts the RFID using an encryption key (hereinafter, referred to as "IDRS key (ID Resolution Server key)") of the ID resolution server 30. As for the IDRS key, a shared key shared by the RFID tag 10 and the ID resolution server 30, or a public key of the ID resolution server 30 is available. The IDRS key is issued by the ID resolution server 30. The encryption unit 12 stores the IDRS key. In particular, as shown in Fig. 4A, the encryption unit 12 encrypts a plain text including a random number or a character string equivalent to a random number and RFID using the IDRS key. Thus, the encryption unit 12 generates an encrypted RFID 1 as the encrypted transmitter identifier and inputs the RFID 1 to the communication unit 11.

As described above, the encryption unit 12 can change the encrypted RFID every time when the encryption is carried out by adding a random number or a character string equivalent to a random number to the RFID and encrypting the same. The encryption unit 12 encrypts in such manner that the encrypted RFID changes at certain intervals; thereby a character string obtained by encrypting the RFID can be seen as a random character string. Thus, a random encrypted RFID is generated.

The communication unit 11 transmits the encrypted RFID 1 as the encrypted transmitter identifier to the RFID reader 20. The communication unit 11 obtains the encrypted RFID 1 from the encryption unit 12. The communication unit 11 may receive an ID request from the RFID reader 20, and transmit the encrypted RFID 1 in response to the ID request, or transmit the encrypted RFID1 periodically. In this way, the RFID tag 10 transmits the RFID to the RFID reader 20 in a state that the RFID reader 20 cannot identify. The communication unit 11 can transmit and receive with the RFID reader 20 via radio such as infrared radiation, radio wave or the like.

The RFID reader 20 includes a communication unit 21, an encryption unit 22, a reader information storage unit 23 and a clock 24. The reader information storage unit 23 stores reader information with respect to the RFID reader 20. As for the reader information, a user ID of the RFID reader 20, a password or the like is available. The user ID is a receiver identifier, which is information capable of uniquely identifying the RFID reader 20. The password is authentication information used for authenticating the RFID reader 20.

The encryption unit 22 encrypts the user ID as the receiver identifier. The encryption unit 22 obtains a user ID and a password from the reader information storage unit 23. Also, the encryption unit 22 obtains present time as a time stamp from the clock 24. The encryption unit 22 uses an encryption key of the data base server 40 (referred to as, "DB key (DataBase server key)") to encrypt the user ID and the password. As for the DB key, a shared key shared by the RFID reader 20 and the data base server 40 or a public key of the data base server 40 is available. Each data base server 40 issues the DB key of each data base server.

The encryption unit 22 stores the DB key of the data base server 40 trusted by the RFID reader 20, and to which the user ID of the RFID reader 20 may be disclosed. In particular, as show in Fig. 4B, the encryption unit 22 encrypts a plain text including a user ID, a password, and a time stamp using the DB key. In this manner, the encryption unit 22 generates an encrypted user ID 2c as the encrypted receiver identifier and the encrypted authentication information, and inputs the same to the communication unit 21.

In this manner as described above, the encryption unit 22 carries out encryption by adding a changing value as time stamp to the user ID; thereby, the encrypted user ID can be changed every time the encryption is carried out. The encryption unit 22 encrypts in such manner that the encrypted user ID changes at certain intervals; thereby a character string obtained by encrypting the user ID can be seen as a random character string. Thus, a random encrypted RFID is generated.

The communication unit 21 receives the encrypted RFID 1 as the encrypted transmitter identifier from the RFID tag 10. The communication unit 21 may transmit an ID request to the RFID tag 10 and receive the encrypted RFID 1 transmitted in response to the ID request or, may receive the encrypted RFID 1 periodically transmitted from the RFID tag 10. The communication unit 21 transmits the encrypted RFID 1 and the encrypted user ID 2c as the encrypted transmitter identifier and the encrypted receiver identifier to the ID resolution server 30.

The communication unit 21 obtains the encrypted user ID 2c from the encryption unit 22. The communication unit 21 adds the encrypted RFID 1 received from the RFID tag 10 and a header 2a to the encrypted user ID 2c obtained from the encryption unit 22 to generate determination information 2. The address of the ID resolution server 30 is set to the header 2a. In this manner, the RFID reader 20 transmits the user ID to the ID resolution server 30 in a state that only the data base server 40 trusted by the RFID reader 20 and determined as, to which the user ID of the RFID reader 20 may be disclosed, can identify.

Also, the communication unit 21 receives tag information with respect tn the RFID tag 10 as the transmitter information from the data base server 40, from the ID resolution server 30. In this manner, the communication unit 21 receives the tag information from the data base server 40 via the ID resolution server 30. The communication unit 21 can transmit and receive with the RFID reader 10 via radio such as infrared radiation, radio wave or the like. The communication unit 21 can transmit and receive with the ID resolution server 30 via a network such as mobile communication network. Internet or the like.

The ID resolution server 30 includes a communication unit 31, a decryption unit 32, a request unit 33 and a server information storage unit 34. The communication unit 31 is a reception unit, which receives a receiver identifier and an encrypted transmitter identifier from the receiver. It is preferred that the communication unit 31 receives the encrypted receiver identifier. In particular, the communication unit 31 receives the determination information 2 including the encrypted user ID 2c as the encrypted receiver identifier and the encrypted RFID 1 as the encrypted transmitter identifier from the RFID reader 20. The communication unit 31 inputs the received determination information 2 to the decryption unit 32.

Further, the communication unit 31 functions as a transfer unit, which receives the transmitter information from the information providing equipment and transmits the information to the receiver. The communication unit 31 receives tag information as the transmitter information from the data base server 40. The communication unit 31 transmits the received tag information to the RFID reader 20. The communication unit 31 can transmit and receive with the RFID reader 20 and the data base server 40 via a network such as mobile communication network, Internet or the like.

The decryption unit 32 decrypts the encrypted transmitter identifier. The decryption unit 32 obtains the determination information 2 from the communication unit 31. The decryption unit 32 decrypts the encrypted RFID 1 included in the determination information 2. In particular, when the IDRS key used for encryption of the RFID is the shared key, using the IDRS key as the decryption key; and when the IDRS key is the public key, using a decryption key for the public key, the decryption unit 32 decrypts the encrypted RFID 1. The decryption unit 32 stores the decryption key. As the decryption result of the encrypted RFID 1, the decryption unit 32 inputs the decrypted RFID or a notification of a failure in decryption to the request unit 33. At this time, the decryption unit 32 inputs the encrypted user ID 2c included in the determination information 2 to the request unit 33 along with the decryption result.

The server information storage unit 34 stores server information with respect to plural data base servers 40. As the server information, the server information storage unit 34 associates the addresses of the respective data base servers 40 with the RFIDs indicating that the tag information provided by each data base server 40 is the tag information with respect to which of the RFID tag 10 and stores the information. Since one database server 40 can provide information with respect to plural RFID tags 10, plural RFIDs are associated with the address of the data base server 40.

The request unit 33 determines the information providing equipment, which provides the transmitter information based on the decryption result of the encrypted transmitter identifier by the decryption unit 32, and requests the transmitter information from the information providing equipment The request unit 33 obtains, as the decryption result of the encrypted RFID 1, RFID obtained by decrypting the encrypted RFID 1 or notification of failure in decryption from the decryption unit 32. Based on the obtained RFID, the request unit 33 refers to the server information storage unit 34 and determines the data base server 40, which provides the tag infonnation with respect to RFID tag 10 having the RFID i.e., the request unit 33 identifies the data base server 40. The request unit 33 obtains the address of the identified data base server 40 from the server information storage unit 34.

The request unit 33 generates an information request requesting the tag information from the identified data base server 40. The information request includes the RFID obtained by the decryption and the encrypted user ID 2c, which is obtained from the decryption unit 32 along with the decryption result. The request unit 33 transmits the generated information request to the address of the identified data base server 40 via the communication unit 31. In this way, the request unit 33 transmits the encrypted receiver identifier to the information providing equipment in order to request the transmitter information. When failed in the decryption, since the request unit 33 can not identify the data base server 40, the request unit 33 ends the processing. As described above, the ID resolution server 30 functions as a proxy server, which decrypts only the encrypted RFID 1 and accesses to the data base server 40.

The data base server 40 includes a communication unit 41, a decryption unit 42, a providing unit 43 and a tag information storage unit 44. The communication unit 41 receives the information request from the ID resolution server 30. The communication unit 41 inputs the received information request to the decryption unit 42. Also, the communication unit 41 transmits tag information to the ID resolution server 30. The communication unit 41 obtains the tag information from the providing unit 43. The communication unit 41 can transmit and receive with the ID resolution server 30 via a network such as mobile communication network, Internet or the like.

The decryption unit 42 decrypts the encrypted receiver identifier. The decryption unit 42 obtains the information request from the communication unit 41. The decryption unit 42 decrypts the encrypted user ID 2c included in the information request. In particular, when the DB key used for the encryption of the user ID and the password is the shared key, using the DB key as the decryption key, and when the DB key is the public key, using the decryption key for the public key, the decryption unit 42 decrypts the encrypted user ID 2c. The decryption unit 42 stores the decryption key of the DB key. The decryption unit 42 inputs, as the decryption result of the encrypted user ID 2c and the password, the user ID obtained by decrypting the encrypted user ID 2c and the password, or a notification of a failure in the decryption to the providing unit 43.

The tag information storage unit 44 stores tag information with respect to the RFID tag 10. The tag information includes additional information with respect to the RFID tag 10 other then the RFID. For example, the tag information includes positional information of the RFID tag 10, information with respect to an object attached with the RFID tag 10, information of surrounding environments of the RFID tag 10 and the like. The tag information storage unit 44 may store the tag information while classifying the information into two kinds; i.e., limited information, which is limited to provide to only specific RFID reader 20, and published information, which may be provided to every RFID reader. As for the specific RFID reader 20 providing the limited information, for example, a RFID reader, which discloses the user ID to the data base server 40; a RFID reader trusted by the data base server 40 such as a RFID reader of which user ID and password are previously stored in the database server 40, or a RFID reader to which a shared key shared with the data base server 40 is provided. Hereinafter, when indicating only the limited information or only the published information, the tag information will be referred to as "limited information" or "published information" respectively; and when indicating the entire tag information including the limited information and the published information, the tag information will be referred to as "tag information".

The providing unit 43 provides the transmitter information to the relay equipment in response to a request of the relay equipment. It is preferred that the providing unit 43 provides the transmitter information to the relay equipment based on the decryption result of the encrypted receiver identifier. The providing unit 43 obtains the decryption result from the decryption unit 42. When the tag information is classified into the limited information and the published information, the providing unit 43 decides which of the limited information or the published information is provided based on the decryption result. When the tag information is not classified into the limited information and the published information, the providing unit 43 decides whether the tag information is or is not provided based on the decryption result.

In the case where the decryption result is the user ID and the password obtained by the decryption, when the providing unit 43 stores the user ID and the password of the RFID reader of which limited information is permitted to provide, the providing unit 43 authenticates whether the RFID reader, which has the user ID and the password obtained by the decryption, is permitted to be provided with the limited information by referring to the stored information. When the providing unit 43 stores the user ID of the RFID reader, which is permitted to be provided with the tag information, the providing unit 43 authenticates whether the RFID reader, which has the user ID and the password obtained by the decryption, is permitted to be provided with the tag information, by referring to the stored information. The providing unit 43 decides which of the limited information or the published information is provided, or the tag information is or is not provided based on the authentication result. Further, when the decryption result is the user ID obtained by the decryption, the providing unit 43 determines as the RFID reader of which user ID is disclosed to the data base server 40, and decides the limited information or the tag information is provided.

When the decryption result is a notification of a failure in decryption, the providing unit 43 determines as the RFID reader of which confidential of the user ID should be kept from the data base server 40, and decides that only the published information is provided or tag information is not be provided. Further, the providing unit 43 may provide the shared key shared with the data base server 40 as the DB key only to the RFID reader which is permitted to be provided with tag information without storing the user ID of which tag information is permitted to provide. In this case, when the decryption result is the user ID, the providing unit 43 authenticates as the RFID reader permitted to be provided. Accordingly, when the decryption result is the user ID, the providing unit 43 decides that the limited information or the tag information is provided.

In accordance with the decision based on the decryption result, the providing unit 43 obtains the relevant tag information from the tag information storage unit 44. The providing unit 43 transmits the tag information to the ID resolution server 30 via the communication unit 41. When the tag information is not provided, the providing unit 43 may notify the ID resolution server 30 of the rejection of the providing. Further, the providing unit 43 may notify that there is no published information presently when the providing unit 43 decides to provide the published information and there is no published information. In this manner as described above, the data base server 40 transmits the tag information to the ID resolution server 30 in response to the request by the ID resolution server 30.

In the information providing system 100, for example, the RFID tag 10 may be provided and managed by an individual. The RFID reader 20 may be owned and managed by an individual. The data base server 40 may be provided and managed by an individual or group. The ID resolution server 30 may be provided and managed by a reliable third party organization. Further, in the information providing system 100, plural data base servers 40 are distributed. Further, in a viewpoint of scalability, it is preferred that a public key is used for encryption and decryption between the RFID tag 10 and the ID resolution server 30.

### (Information providing method)

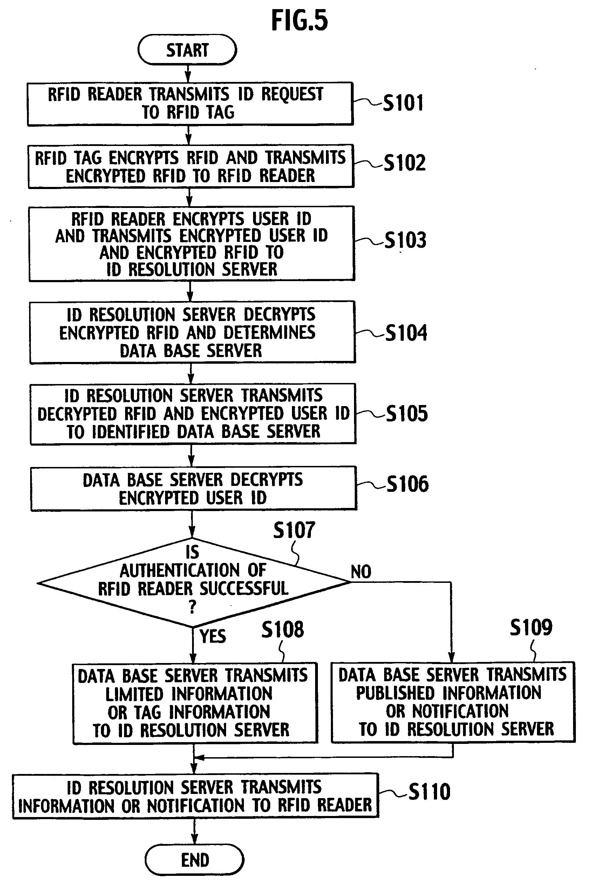

Referring to Fig. 5, the procedure of the information providing method using the information providing system 100 shown in Fig. 3 will be described below. The RFID reader 20 transmits an ID request to the RFID tag 10 (S101). The RFID tag 10 encrypts its own RFID using the IDRS key, and transmits the encrypted RFID 1 to the RFID reader 20 (S102).

The RFID reader 20 receives the encrypted RFID 1 from the RFID tag 10. The RFfI7 reader 20 encrypts the user ID and the password using the DB key. The RFID reader 20 transmits the encrypted user ID 2c along with the received encrypted RFID 1 as the determination information 2 to the ID resolution server 30 (S103).

The ID resolution server 30 receives the determination information 2 from the RFID reader 20 and decrypts the encrypted RFID 1 included in the determination information 2. The ID resolution server 30 determines the data base server 40, which provides the tag information of the RFID tag 10 having the RFID based on the RFID obtained by the decryption i.e., identifies the data base server 40 (S104). The ID resolution server 30 transmits the decrypted RFID and an information request including the encrypted user ID 2c to the identified data base server 40 to request tag information therefrom. (S105)

The data base server 40 attempts to decrypt the encrypted user ID 2c included in the information request (S106). The data base server 40 authenticates the RFID reader using the decryption result (S107). In particular, when the user ID and the password are obtained by the deayption, the data base server 40 authenticates whether the RFID reader, which has the user ID and the password, is permitted to be provided with limited information or tag information, by referring to the stored user ID and the password. In the case where, as the DB key, a shared key shared with the database server 40 is provided to only the RFID reader that is permitted to be provided, the data base server 40 authenticates whether the RFID reader is permitted to be provided based on the result of the decryption being success or failure. Or, when the decryption is successful, the data base server 40 may determine that the RFID reader is a RFID reader, which discloses the user ID to the data base server 40, and is permitted to be provided with the limited information or the tag information. And when failed in the decryption, the data base server 40 may determine that the RFID reader is a RFID reader, which keeps the confidential of the user ID from the data base server 40, and decide that only the published information is provided or the tag information is not provided. In this way, the data base server 40 confirms whether the RFID reader 20 is reliable for the data base server 40.

In step (S107), when the authentication of the RFID reader is successful and it is determined to provide the limited information or the tag information to the RFID reader 20, the data base server 40 transmits the limited information or the tag information to the ID resolution server 30 (S108). On the other hand, in step (S107), when railed in the authentication and it is determined only the published information is provided, or the tag information is not provided, the data base server 40 transmits a published information, or, a notification of rejection of providing, or a notification that these is no published information to the ID resolution server 30 (S109). And then, the ID resolution server 30 transmits the tag information, the published information, the limited information or the notification received from the data base server 40 to the RFID reader 20 to transfer it (S110).

According to the above-described the information providing system 100, the RFID tag 10, the RFID reader 20, the ID resolution server 30, the data base server 40, and the information providing method, even when the RFID is encrypted, the ID resolution server 30 can decrypt the encrypted RFID 1 and determine the data base server 40 which provides tag information desired by the RFID reader 20. The ID resolution server 30 can relay the tag information between the data base server 40 and the RFID reader 20. It is possible to secure the confidential of the RFID and the server information with respect to the data base server 40 from the RFID reader 20. Accordingly, safety providing of information in an information providing process in which the RFID tag 10, the RFID reader 20 and the data base server 40 are involved in each other, can be easily achieved. Also, the data base servers 40 can be distributed in a state that the RFID reader 20 cannot determine the association between the data base server 40 and the provided tag information of the RFID tag 10.

Further, the RFID reader 20 encrypts the user ID using the DB key, and transmits the encrypted user ID 2C to the ID resolution server 30. In this case, the ID resolution server 30 requests the tag information by transmitting the encrypted user ID 2C to the data base server 40. The data base server 40 decrypts the encrypted user ID 2c and transmits the tag information to the ID resolution server 30 based on the decryption result

As a result, the data base server 40, which is capable of knowing the information with respect to the RFID reader 20, can be limited to the data base server 40 which has the decryption key of the DB key, which is capable of decrypting the encrypted user ID 2c and used by the RFID reader 20 for encryption. Accordingly, the RFID reader 20 can secure the confidential of the user ID from the data base server 40 to which the user ID is not disclosed.

That is, the user ID can be disclosed to only the data base server 40 that the RFID reader 20 trusts, and prevent the user ID from being disclosed to unintended server. The RFID reader 20 communicates with the data base server 40 via the ID resolution server 30; thus the RFID reader 20 has no access to the server information. Therefore, this system, which is capable of preventing the information usable for identification determination like user ID from being disclosed to arbitrary data base server 40, is useful to provide the information safely. Also, only the reliable data base server 40, to which the RFID reader 20 determines the user ID may be disclosed, is permitted to build the association between the user ID and the tag information as shown in Fig. 2. Accordingly, it is possible to prevent the data base server, from which the user of the RFID reader 20 wants to keep the confidential of the information, from building the association between the user ID and the tag information.

Further, the data base server 40 can control the transmission of the tag information based on the decryption result; i.e., depending on whether the confidential of the RFID reader 20 is kept from the data base server 40 or disclosed to the data base server 40. That is, the data base server 40 can control tag information to be disclosed or not to the RFID reader 20 based on the decryption result; thus, the access to the tag information can be controlled. Therefore, it is prevented the data base server 40 from providing the tag information in response to an inquiry from the RFID reader 20; thus, it is prevented the tag information from being known by a party from which the confidential of the tag information should be kept

To trace a user concerned with a RFID tag, (1) RFID related to the user, (2) an identifier of a RFID reader provided by a tracer, and (3) corresponding information among the user to be traced, the RFID, the identifier of the RFID reader, and the physical information such as positional information thereof are required. To secure the confidential, the information providing system 100 can encrypts the (1) RFID in the above requirements, which is operable by the traced user. To trace a user concerned with a RFID reader, (a) an identifier (user ID) of the RFID reader of the traced user, (b) a RFID of an RFID tag provided by a tracer, and (c) corresponding information among the traced user, user ID of the RFID reader, RFID and physical information such as positional information thereof are required. To secure the confidential, the information providing system 100 can encrypt the (a) identifier (user ID) of the RFID reader in the above requirements, which is operable by the traced user.

Therefore, the information providing system 100 can make it difficult to build an association between the user and the RFID of the RFID tag 10 or the user ID of the RFID reader 20. That is, by securing the confidential of the RFID, the information providing system 100 can reduce the possibility of tracing the user using the RFID; and by securing the confidential of the user ID of the RFID reader 20, the possibility of tracing the user using the user ID can be reduced. Further, it is possible to prevent the RFID and the user ID from being disclosed to an unintended RFID tag 10 or RFID reader 20; thus, the information can be exchanged appropriately between the RFID 10 and the RFID reader 20. Further, in the process to transmit the user ID as the identifier of the RFID reader 20 to the data base server 40 also, the confidential of the user ID is secured to reduce the possibility of tracing the user.

Particularly, the RFID tag 10 changes the encrypted RFTD at every encryption using a random number or a character string equivalent to a random number. Furthermore, the RFID reader 20 changes the encrypted user ID at every encryption using a time stamp. Accordingly, the RFID and the user ID are more hardly specified. As a result, the safety level can be further increased and the tracing is made to be more difficult.

When the RFID tag 10, the RFID reader 20 and data base server 40 are widely used by individuals, to reduce the possibility of tracing of individuals by associating various information with individuals, the information providing system 100 and the information providing method as described above are particularly useful.

Although the inventions have been described above by reference to certain embodiments of the inventions, the inventions are not limited to the embodiments described above. Modifications and variations of the embodiments described above will occur to those skilled in the art, in light of the above teachings.

## Claims

1. An information providing method, comprising:
receiving a receiver identifier and an encrypted transmitter identifier from a receiver receiving the encrypted transmitter identifier from a transmitter by a relay equipment;
decrypting the encrypted transmitter identifier by the relay equipment;
determining an information providing equipment providing transmitter information with respect to the transmitter based on a decryption result of the encrypted transmitter identifier by the relay equipment;
requesting the transmitter information from the information providing equipment by the relay equipment;
receiving the transmitter information from the information providing equipment by the relay equipment; and
transmitting the transmitter information to the receiver by the relay equipment.

2. The information providing method according to claim 1, further comprising:
encrypting the receiver identifier using an encryption key of the information providing equipment by the receiver,
transmitting an encrypted receiver identifier to the relay equipment by the receiver,
transmitting the encrypted receiver identifier to the information providing equipment for requesting the transmitter information by the relay equipment,
decrypting the encrypted receiver identifier by the information providing equipment, and
transmitting the transmitter information to the relay equipment based on a decryption result of the encrypted receiver identifier by the information providing equipment.

3. The information providing method according to claim 1, further comprising changing the encrypted transmitter identifier every encryption by the transmitter.

4. An information providing system, comprising:
a relay equipment configured to receive a receiver identifier and an encrypted transmitter identifier from a receiver receiving the encrypted transmitter identifier from a transmitter, decrypt the encrypted transmitter identifier, determine an information providing equipment providing transmitter information with respect to the transmitter based on a decryption result of the encrypted transmitter identifier, request the transmitter information from the information providing equipment, receive the transmitter information from the information providing equipment, and transmit the transmitter information to the receiver, and
the information providing equipment configured to transmit the transmitter information to the relay equipment in response to a request of the relay equipment.

5. The information providing system according to claim 4, wherein
the receiver encrypts the receiver identifier using an encryption key of the information providing equipment and transmits an encrypted receiver identifier to the relay equipment,
the relay equipment transmits the encrypted receiver identifier to the information providing equipment for requesting the transmitter information, and
the information providing equipment decrypts the encrypted receiver identifier and transmits the transmitter information to the relay equipment based on a decryption result of the encrypted receiver identifier.

6. The information providing system according to claim 4, wherein the transmitter changes the encrypted transmitter identifier every encryption.

7. A relay equipment, comprising:
a reception unit configured to receive a receiver identifier and an encrypted transmitter identifier from a receiver receiving the encrypted transmitter identifier from a transmitter;
a decryption unit configured to decrypt the encrypted transmitter identifier;
a request unit configured to determine an information providing equipment providing transmitter information with respect to the transmitter based on a decryption result of the encrypted transmitter identifier and request the transmitter information from the information providing equipment; and
a transfer unit configured to receive the transmitter information from the information providing equipment and transmit the transmitter information to the receiver.
